# EUROPEAN PATENT APPLICATION

(11) **EP 2 536 166 A1**
(43) Date of publication of application: **19.12.2012**
(21) Application number: 11169775.1
(22) Date of filing: 14.06.2011
(51) Int. Cl.: H04Q 11/00, H04J 3/08, H04L 12/407, H04L 12/437

(54) **Signal path control device**

(71) Applicant: SIEMENS AKTIENGESELLSCHAFT, 80333 München (DE)
(72) Inventor: Hansen, Ulrich Vestergaard B., 7400 Herning (DK); Hoejgaard, Jannik, 7330 Brande (DK)

(57) **Abstract**

It is described a signal path control device (100). The signal path control device (100) comprises a first input terminal (102) and a first output terminal (103) for coupling the signal path control device to a communication network, a second input terminal (105) and a second output terminal (104) for coupling the signal path control device to a network device (202), and a relay input terminal (109) being coupleable to a relay output terminal (209) of the network device. The signal path control device is adapted to control the path of signals within the signal path control device. In a first operation mode, the signal path control device is adapted for directing signals received via the first input terminal to the second output terminal, which is coupleable to an input terminal (204) of the network device, for receiving signals from an output terminal (205) of the network device via the second input terminal and for outputting signals via the first output terminal. In a second operation mode, the signal path control device is adapted for directing signals received via the first input terminal to the first output terminal. The signal path control device is adapted to switch from the first operation mode into the second operation mode in response to a trigger signal received via the relay input terminal.

## Description

### Field of invention

The present invention relates to the field of communication networks, in particular to optical communication networks, wherein different devices are connected via optical fibers. In particular, the present invention relates to a signal path control device. Further, the present invention relates to a communication network. Furthermore, the present invention relates to a method of controlling the path of signals within a signal path control device.

### Art Background

Traditional fiber optical ring topologies, for example between Ethernet switches, have been widely deployed in industrial environments for many years. The topology itself has some great advantages such as a cheap way of gaining resilience from loss of one computer network connection or network device, less cabling complexity in certain deployments or inexpensive and redundant fiber optical infrastructure.

However, such a fiber optical topology requires additional device configuration complexity (through non-scalable redundancy protocols), longer convergence times as rings become larger, variable number of hops, which makes designing predictable performance more complex. Further, the topology only supports resilience from loss of one computer network connection or network device.

As computer networks naturally becomes larger, both the distance between two nodes but also the likelihood of two devices being offline (or cable failures) at the same time due to scheduled maintenance or failures are becoming an ever greater risk. For example, when deploying ring computer networks over long distances, it would be time consuming to remedy the error, if an event or error happened simultaneously in the computer network. At the same time it would be very expensive, as it is likely that the operation of the network would have to be stopped due to lack of control and monitoring.

In a ring topology network, when two network devices are offline at the same time, the communication to all other devices participating in that ring configuration will be interrupted and appear as unreachable/uncontrollable. Such a situation is very expensive as it causes network downtime, and can be very challenging to troubleshoot.

There may be a need for a more reliable or failure-resistant operation of networks.

### Summary of the Invention

This need may be met by the subject matter according to the independent claims. Advantageous embodiments of the present invention are described by the dependent claims.

According to a first aspect of the invention there is provided a signal path control device. The signal path control device comprises a first input terminal and a first output terminal for coupling the signal path control device to a communication network. The signal path control device comprises further a second input terminal and a second output terminal for coupling the signal path control device to a network device. Furthermore, the signal path control device comprises a relay input terminal being coupleable to a relay output terminal of the network device. The signal path control device is adapted to control the path of signals within the signal path control device. In a first operation mode, the signal path control device is adapted for directing signals received via the first input terminal to the second output terminal, which is coupleable to an input terminal of the network device, for receiving signals from an output terminal of the network device via the second input terminal and for outputting signals via the first output terminal. In a second operation mode, the signal path control device is adapted for directing signals received via the first input terminal to the first output terminal. Furthermore, the signal path control device is adapted to switch from the first operation mode into the second operation mode in response to a trigger signal received via the relay input terminal.

This aspect of the invention is based on the idea to extend or maintain the resilience in an optical network even in times where maintenance is taking place, faulty devices are connected to the network, or failures, like loss of power supply, occur causing link-down events. This can be achieved by using the described signal path control device. The signal path control device allows the incoming signals to bypass / pass through in case for instance of power supply or switch failures or maintenance, instead of being directed towards the network device.

According to this aspect of the invention, the signal path control device may control the physical aspects of the network infrastructure in order to eliminate the disadvantage and vulnerability of ring topologies in computer networks. The signal path control device may act as a passive bypass or repeater when a predefined trigger event occurs.

The network device may denote a computer networking device that connects network segments. One or more devices, like computers or control units of windturbines may be connected to the network device and, via the network device and the signal path control device to the communication network. The described signal path control device may be used preferably in a passive computer network infrastructure being deployed in a ring structure.

The network device may be for example an Ethernet switch providing common features of an Ethernet switch. Such an Ethernet switch may be called also network switch or switching hub.

The signal path control device may be any kind of element being adapted to provide the required features as described above. In the second operation mode, the signal path control device may be adapted to act like a passive bypass or repeater. The signal path control device may comprise any element being able to change the path of the signals in the second operation mode in respect to the path of the signals in the first operation mode.

By using the described signal path control device, the overall availability of the computer network may be increased, as the signal path control device may still act as a passive repeater in a failure event. Thus, the vulnerability of the ring topology to dual device failures may be eliminated or at least reduced.

The signal path control device may comprise different input and output terminals for coupling the signal path control device to the communication network on the one hand and to a network device, for example an Ethernet switch, on the other hand. Further, the signal path control device may comprise a relay input terminal, which may be any kind of input terminal being adapted to receive a trigger signal from the network device.

The term "trigger signal" may denote any signal being able to inform the signal path control device to switch into the second operation mode. It may also denote the absence of a signal. For example, as long as any signal is provided to the signal path control device, it may remain in the first operation mode. In the event of any failure, for instance, the signal may end. In this case, the trigger signal would be the absence or ending of the signal.

The term "signals" may denote any kind of signals, for example electrical, electromagnetic or optical signals.

According to a further embodiment of the invention, the signal path control device may further comprise a power terminal for coupling the signal path control device to a power supply.

The term "power supply" may denote any kind of power source via which the signal path control device may be supplied with power. In case of any failure, the power supply may be lost. However, the signal path control device might continue to operate in a passive mode, i.e. the second operation mode, as a repeater.

According to a further embodiment of the invention, the trigger signal is generated by the network device.

The network device may generate the trigger signal for instance in case of any occurring failure. In a further embodiment, the trigger signal may be generated during maintenance of the network device.

According to a further embodiment of the invention, the trigger signal is associated with a failure of the power supply.

In the event of a failure of the power supply, for instance too high or too low power supply or loss of the power supply, the second operation mode of the optical path control unit may be triggered. This may be done by sending a signal, providing a current or voltage peak, removing any power supply, any kind of mechanical mechanism etc. via the relay input terminal. The power supply may refer to the power supply of the optical path control unit or the power supply of the network device.

According to a further embodiment of the invention, the trigger signal is associated with a failure of the network device.

In case of failure of the network device, the optical control unit may be triggered by sending a signal, providing a current or voltage peak, removing any power supply, etc. via the relay input terminal.

According to a further embodiment of the invention, the trigger signal is associated with a disconnection of the network device and the power supply.

When the power supply is disconnected from the network device, the second operation mode of the signal path control unit may be triggered. This may correspond to the triggering in case of power supply failure. Hence, this may be done by sending a signal, providing a current or voltage peak, removing any power supply, any kind of mechanical mechanism etc. via the input relay terminal.

According to a further embodiment of the invention, the signals are optical signals.

In this embodiment, the communication network may be an optical communication network and the signal path control device may be an optical path control device.

The optical path control device may comprise any kind of element being adapted to provide the required features as described above. In the second operation mode, the optical path control device may be adapted to act like a passive bypass or repeater. The optical path control device may be any element being able to change the path of the optical signals in the second operation mode in respect to the path of the optical signals in the first operation mode.

The described optical path control device may be used according to this embodiment in a passive optical computer network infrastructure being deployed in a ring structure. The optical path control device may affect the physical aspects of the fiber optical infrastructure in order to eliminate the disadvantage and vulnerability of optical ring topologies in computer networks.

According to a further embodiment of the invention, the signal path control device comprises a prism for directing the optical signals.

In case of the first operation mode, i.e. directing the optical signals to the network device, such a prism may be arranged in the optical path between the first optical input terminal and the first optical output terminal. When a trigger event or signal occurs, the optical path control device would switch to the second operation mode. The prism may then be removed from the optical path and the optical signals may be directed directly from the first optical input terminal to the first optical output terminal.

In the first operation mode, the prism may be fixed in its position for example by using any electrical force, for instance by using an electrical magnet. In the second operation mode, the electrical force may be turned off, for instance in case of loss of the power supply the electrical force may correspond to the power provided by the power supply. The electrical magnet may then be deactivated and the prism may be removed from the optical path, for instance due to gravity.

According to a further embodiment of the invention, the signal path control device comprises a splitter for directing the optical signals.

A splitter may able to change the optical path of incoming optical signals. Such a splitter may be any kind of common splitter. Such a splitter may be adapted to split incoming optical signals in two directions, for instance in direction of the second optical input terminal and the first optical output terminal. As explained in combination with the use of a prism, also a splitter may be arranged in the optical path between the first optical input terminal and the first optical output terminal. When a trigger event or signal occurs, the optical path control unit would switch to the second operation mode. The splitter may then be removed from the optical path and the optical signals may be directed directly from the first optical input terminal to the first optical output terminal. In another embodiment, the splitter may remain in the optical path.

According to a further embodiment of the invention, the signal path control device is further adapted to switch from the second operation mode into the first operation mode in response to a further trigger signal received via the relay input terminal.

Such a further trigger signal may correspond to an signal, indicating that the predefined trigger event is finished, for example after establishing the power supply again, fixing any failure or after finishing the maintenance. Such a signal may be input to the network device and send to the optical path control unit, or may be input directly as an external signal to the optical path control unit.

According to a further aspect of the invention, there is provided a communication network, for instance an optical communication network, comprising a signal path control device having some of the above mentioned features and a network device being coupled to the signal path control device.

Such a communication network may be in the form of a ring topology. Further, the network may be a passive network.

According to a further embodiment of the invention, the network device is coupled to an external device and the network device is adapted to generate the trigger signal in response to an external signal received from the external device.

The network device may comprise at least one electrical port for coupling the network device to an external device. The external device may be any kind of external device, like a computer or a control unit of a windturbine. Also a plurality of external devices may be coupled to the network device.

The external device, for example a control unit of a windturbine, may send a signal to the network device, wherein the signal may be the trigger signal. Such a signal may be sent for example in case of maintenance of the external device.

The external signal may denote for example a failure signal provided by the power supply or provided by any other device within the optical network. Further, such an external signal may also be input by a user, for instance by pressing a button on the network device.

According to a further embodiment of the invention, the network device is an Ethernet switch.

An Ethernet switch may provide common features of an Ethernet switch. Such an Ethernet switch may be called also network switch or switching hub.

According to a further aspect of the invention, there is provided a method of controlling the path of signals within a signal path control device. The signal path control device comprises a first input terminal and a first output terminal for coupling the signal path control device to a communication network, a second input terminal and a second output terminal for coupling the signal path control device to a network device, and a relay input terminal being coupleable to a relay output terminal of the network device. The signal path control device is adapted to control the path of signals within the signal path control device. The method comprises in a first operation mode of the signal path control device directing signals received via the first input terminal to the second output terminal, which is coupleable to an input terminal of the network device, receiving signals from an output terminal of the network device via the second input terminal, and outputting signals via the first output terminal. In a second operation mode of the signal path control device, the method comprises directing signals received via the first input terminal to the first output terminal. The method comprises further switching the signal path control device from the first operation mode into the second operation mode in response to a trigger signal received via the relay input terminal.

Also this aspect of the invention is based on the idea to extend or maintain the resilience in an optical network even in times where maintenance is taking place, faulty devices are connected to the network, or failures, like loss of power supply, occur causing link-down events. This can be achieved by using the described method. According to the described method, the optical light may be bypassed / passed through in case for instance of power supply or switch failures or maintenance.

According to a further aspect of the invention, there is provided a computer program for controlling the path of signals within a signal path control device. The computer program, when being executed by a data processor, is adapted for controlling the above described method of controlling the path of optical signals within a signal path control device.

As used herein, reference to a computer program is intended to be equivalent to a reference to a program element containing instructions for controlling a computer system to coordinate the performance of the above described method.

The computer program may be implemented as computer readable instruction code in any suitable programming language, such as, for example, JAVA, C++, and may be stored on a computer-readable medium (removable disk, volatile or non-volatile memory, embedded memory/processor, etc.). The instruction code is operable to program a computer or any other programmable device to carry out the intended functions. The computer program may be available from a network, such as the World Wide Web, from which it may be downloaded.

The invention may be realized by means of a computer program respectively software. However, the invention may also be realized by means of one or more specific electronic circuits respectively hardware. Furthermore, the invention may also be realized in a hybrid form, i.e. in a combination of software modules and hardware modules. The invention may also be realized by a combination of software modules and mechanical, electromechanical and/or passive components.

According to a further aspect of the invention there is provided a computer-readable medium (for instance a CD, a DVD, a USB stick, a floppy disk or a hard disk), in which a computer program for controlling the path of signals within a signal path control device is stored, which computer program, when being executed by a processor, is adapted to carry out or control a method of controlling the path of signals within a signal path control device.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawing

Figure 1 shows a signal path control device according to an embodiment of the invention.
Figure 2 shows a communication network comprising a signal path control device according to a further embodiment of the invention coupled to an Ethernet switch.
Figure 3 shows a communication network comprising a signal path control device according to a further embodiment of the invention coupled to an Ethernet switch in the first operation mode of the signal path control device.
Figure 4 shows a communication network comprising a signal path control device according to a further embodiment of the invention coupled to an Ethernet switch in the second operation mode of the signal path control device.
Figure 5 shows a communication network.
Figure 6 shows a communication network with failures in network devices.

### Detailed Description

The illustration in the drawing is schematically. It is noted that in different figures, similar or identical elements are provided with the same reference signs.

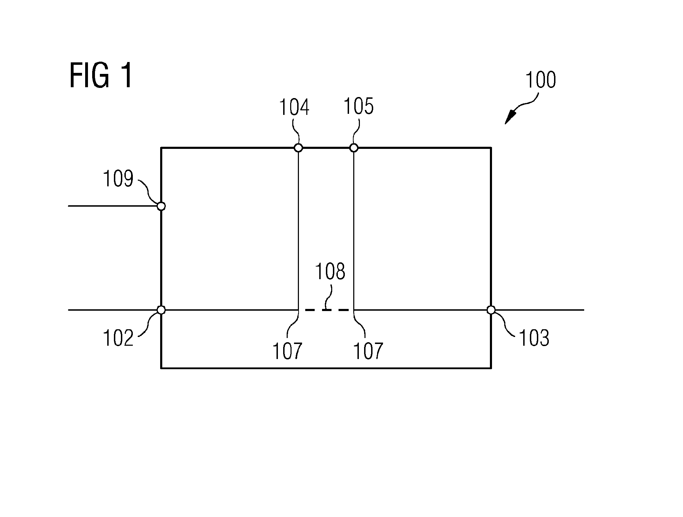

Figure 1 shows a signal path control device 100 according to an embodiment of the invention. The signal path control device comprises a first input terminal 102 and a first output terminal 103 for coupling the signal path control device to a communication network. The communication network may have a ring topology and may be a passive optical network. The signal path control device further comprises a second input terminal 105 and a second output terminal 104 for coupling the signal path control device to a network device. Furthermore, the signal path control device comprises a relay input terminal 107 being coupleable to a relay output terminal of the network device.

The signal path control device may further comprise a power terminal to be coupled to a power supply. The power supply may be for example a power supply unit.

The signal path control device is adapted to control the path of signals within the signal path control device. In a first operation mode, the signal path control device directs (107) signals received via the first input terminal 102 to the second output terminal 104. The second output terminal 104 may be connected or coupled to an input terminal of the network device. The network device may be for example an Ethernet switch, a router, etc. The signal path control device receives signals from an output terminal of the network device via the second input terminal 105 and outputs the received signals via the first output terminal 103.

In a second operation mode, the signal path control device directs signals received via the first input terminal directly (108) to the first output terminal 103. The signal path control device switches from the first operation mode into the second operation mode in response to a trigger signal received via the relay input terminal. Such a trigger signal may occur for example caused by loss of the power supply

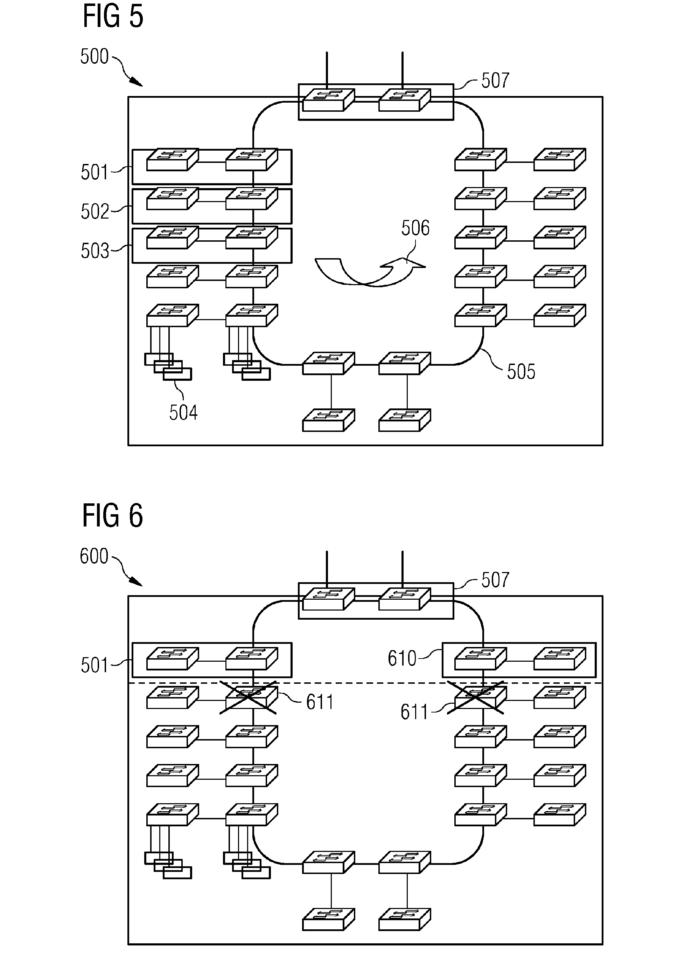

In Figure 5, a communication network 500 is shown. Such a communication network may be deployed in a ring topology. A plurality of systems, e.g. a first system 5401, a second system 502, a third system 503, etc., may be connected via a singlemode cable 505.

TCP/IP devices 504, for instance computers, may be connected to the network via Ethernet switches. A ring redundancy 506 is provided. Also aggregated or aggregation switches 507 or any other kind of network device may be connected to the network.

Figure 6 shows the case of failed devices 611 in a communication network 600. In the case of any failure of at least two devices, a part of the network can not be reached anymore. All devices below the dotted line, i.e. after the systems 501 and 610 cannot be reached anymore.

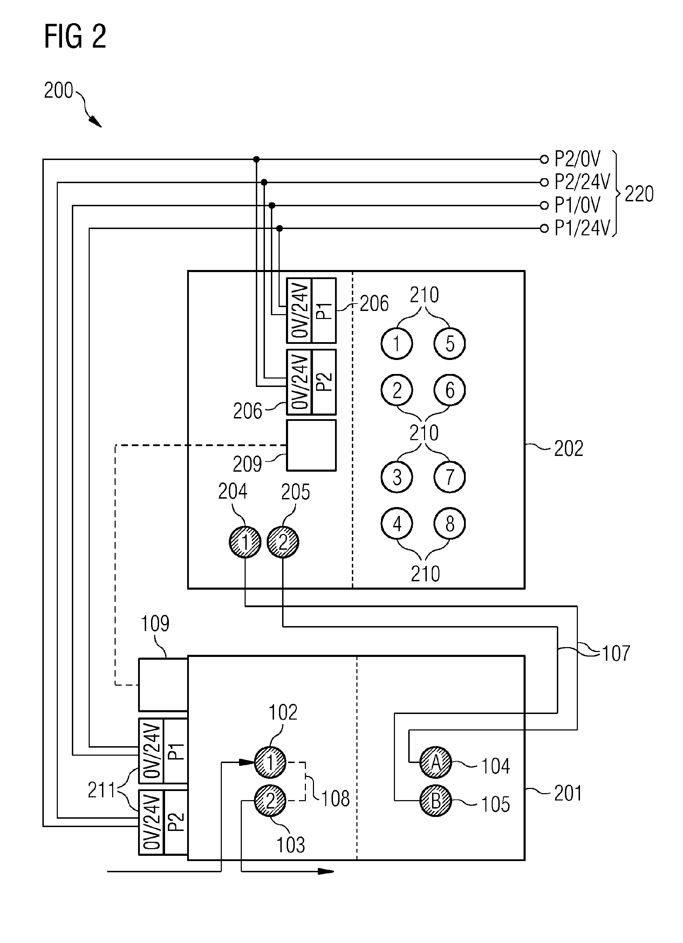

To avoid such a completely failure, the signal path control device according to herein described embodiments may be used. Figure 2 shows an exemplary embodiment of a communication network 200, wherein a signal path control device 201 is connected with an Ethernet switch 202.

In addition to the signal path control device described in Figure 1, the signal path control device comprises power supply terminals 211, via which the signal path control device is coupled to a power supply. The power supply for the signal path control device may be the same as for the Ethernet switch.

The Ethernet switch 202 shows a plurality of ports 210 for connecting external devices. Further, the Ethernet switch 202 comprises two power terminals 207, for connecting the Ethernet switch to two redundant power supplies 220. Each power supply is connected via two lines.

In the first operation mode, the signal path control device directs signals received via the first input terminal to the second output terminal, which is coupled to an input terminal 204 of the Ethernet switch. The signal path control device receives signals from an output terminal 205 of the Ethernet switch via the second input terminal.

In case the signal path control device receives a trigger signal via the relay input terminal 109 from the relay output terminal 209 of the Ethernet switch, the signal path control device switches from the first operation mode into the second operation mode.

In the second operation mode, the signal path control device directs signals received via the first input terminal directly to the first output terminal.

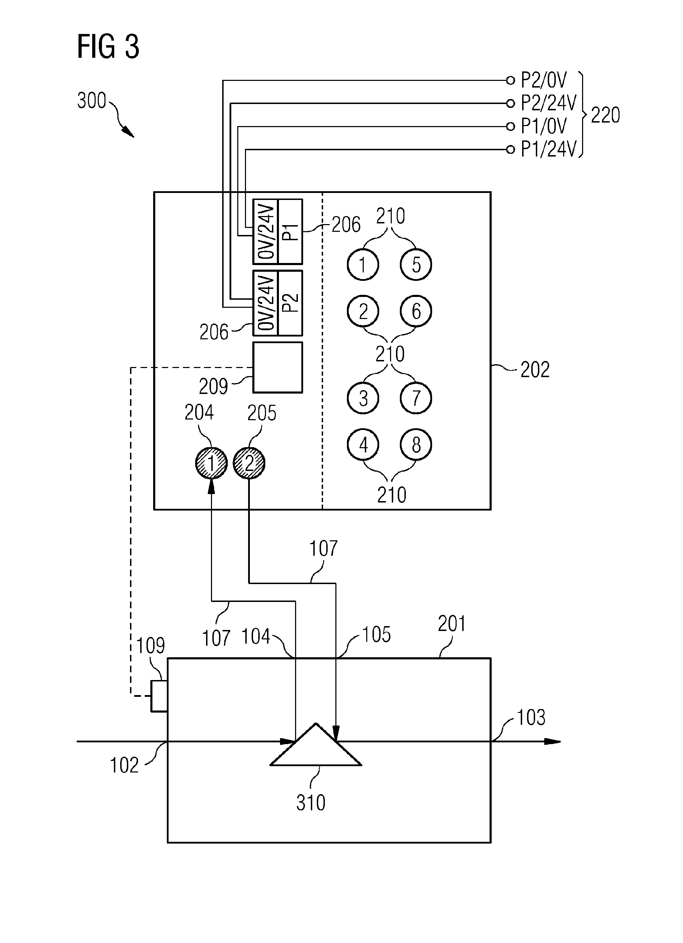

One further embodiment of the communication network is described in Figures 2 and 3. In these examples, the communication network 300, 400 is an optical communication network and the signals are optical signals. In these embodiments, the signal path control device 201 comprises a prism 310 for directing optical signals.

In the first operation mode (as shown in Figure 3), the prism 310 of the signal path control device, directs optical signals from the first optical input terminal 102 to the second output terminal 104, and then to the Ethernet switch. Further, it receives optical signals from the second optical input terminal 105 and directs these signals to the first optical output terminal 103.

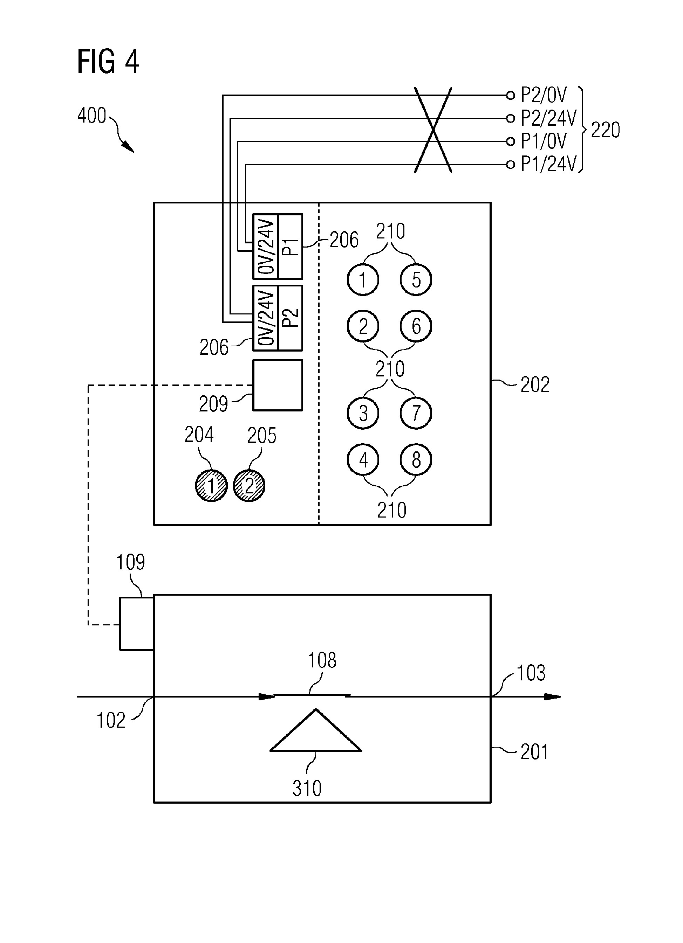

As shown in Figure 4, the Ethernet switch 202 is disconnected from the power supplies 220, and in this case, also the signal path control device is disconnected from the power supplies. The signal path control device 201 acts in the second operation mode as a repeater. The prism falls down, for example due to a deactivated electric magnet, and enables the direct path 108 between the first optical input terminal 102 and the first optical output terminal 103.

Also other types may be used instead of a prism, for example a splitter or any kind of switch.

It should be noted that the term "comprising" does not exclude other elements or steps and the use of articles "a" or "an" does not exclude a plurality. Also elements described in association with different embodiments may be combined. It should also be noted that reference signs in the claims should not be construed as limiting the scope of the claims.

In order to recapitulate the above described embodiments of the present invention one can state:
The invention is based on the idea to extend or maintain the resilience in an optical network even in times where maintenance is taking place, faulty devices are connected to the network, or failures, like loss of power supply, occur causing link-down events. This can be achieved by using the described signal path control device or described method. The signal path control device allows the incoming signals to bypass / pass through in case for instance of power supply or switch failures or maintenance.

According to the invention, the signal path control device or method may control the physical aspects of the network infrastructure in order to eliminate the disadvantage and vulnerability of ring topologies in computer networks. The signal path control device may act as a passive bypass or repeater when a trigger event occurs.

## Claims

1. A signal path control device (100), comprising a first input terminal (102) and a first output terminal (103) for coupling the signal path control device to a communication network,
a second input terminal (105) and a second output terminal (104) for coupling the signal path control device to a network device (202), and
a relay input terminal (109) being coupleable to a relay output terminal (209) of the network device,
wherein the signal path control device is adapted to control the path of signals within the signal path control device,
wherein, in a first operation mode, the signal path control device is adapted for directing signals received via the first input terminal to the second output terminal, which is coupleable to an input terminal (204) of the network device, for receiving signals from an output terminal (205) of the network device via the second input terminal and for outputting signals via the first output terminal,
wherein, in a second operation mode, the signal path control device is adapted for directing signals received via the first input terminal to the first output terminal, and
wherein the signal path control device is adapted to switch from the first operation mode into the second operation mode in response to a trigger signal received via the relay input terminal.

2. The signal path control device (100) as set forth in claim 1,
further comprising a power terminal (211) for coupling the signal path control device to a power supply (220).

3. The signal path control device (100) as set forth in any one of the preceding claims,
wherein the trigger signal is generated by the network device (202).

4. The signal path control device (100) as set forth in any one of the preceding claims,
wherein the trigger signal is associated with a failure of the power supply (220).

5. The signal path control device (100) as set forth in any one of the preceding claims,
wherein the trigger signal is associated with a failure of the network device (202).

6. The signal path control device (100) as set forth in any one of the preceding claims,
wherein the trigger signal is associated with a disconnection of the network device (202) and the power supply (220) **.**

7. The signal path control device (100) as set forth in any one of the preceding claims,
wherein the signals are optical signals.

8. The signal path control device (100) as set forth in claim 7,
further comprising a prism (310) for directing the optical signals.

9. The signal path control device (100) as set forth in claim 7,
further comprising a splitter for directing the optical signals.

10. The signal path control device (100) as set forth in any one of the preceding claims,
being adapted to switch from the second operation mode into the first operation in response to a further trigger signal received via the relay input terminal (109).

11. A communication network, comprising
a signal path control device (100) as set forth in any one of the 1 to 10, and
a network device (202) being coupled to the signal path control device.

12. The communication network as set forth in claim 10,
wherein the network device (202) is coupled to an external device, and
wherein the network device is adapted to generate the trigger signal in response to an external signal received from the external device.

13. The communication network as set forth in claim 10 or 11,
wherein the network device (202) is an Ethernet switch.

14. A method of controlling the path of signals within a signal path control device, wherein the signal path control device comprises a first input terminal and a first output terminal for coupling the signal path control device to a communication network, a second input terminal and a second output terminal for coupling the signal path control device to a network device, and a relay input terminal being coupleable to a relay output terminal of the network device, wherein the signal path control device is adapted to control the path of signals within the signal path control device,
the method comprising
in a first operation mode of the signal path control device,
directing signals received via the first input terminal to the second output terminal, which is coupleable to an input terminal of the network device,
receiving signals from an output terminal of the network device via the second input terminal, and
outputting signals via the first output terminal,
in a second operation mode of the signal path control device,
directing signals received via the first input terminal to the first output terminal, and
switching the signal path control device from the first operation mode into the second operation mode in response to a trigger signal received via the relay input terminal.

15. A computer program for controlling the path of signals within a signal path control device, the computer program, when being executed by a data processor, is adapted for controlling the method as set forth in claim 14.
